# EUROPÄISCHE PATENTANMELDUNG

(11) **EP 1 674 491 A2**
(43) Veröffentlichungstag der Anmeldung: **28.06.2006**
(21) Anmeldenummer: 05111805.7
(22) Anmeldetag: 07.12.2005
(51) Int. Cl.: C08G 18/08, C08J 9/00

(54) **Mehrkomponenten-Ortschaumsystem für die Herstellung von interpenetrierenden polymeren Netzwerken und dessen Verwendung**

(30) Priorität: 23.12.2004 DE 102004062225
(71) Anmelder: HILTI Aktiengesellschaft, 9494 Schaan (LI)
(72) Erfinder: Schmitt, Franz-Josef, 81369, München (DE); Leitner, Michael, 86899 Landsberg (DE); Schnöller, Ute, 80935, München (DE)
(74) Vertreter: Wildi, Roland

(57) **Zusammenfassung**

Beschrieben werden ein Mehrkomponenten-Ortschaumsystem für die Herstellung von interpenetrierenden polymeren Netzwerken (IPN) aus geschäumtem Polyurethan und mindestens einem weiteren Polymer für Bauzwecke vor Ort, mit einer Polyisocyanatkomponente (A) und einer Polyolkomponente (B) zur Bildung des Polyurethans und weiteren Komponenten (C) und (D) zur Bildung des weiteren Polymers, welche Komponenten (A) bis (D) in reaktionsinhibierend getrennter Form vorliegen, das dadurch gekennzeichnet ist, daß die Komponenten (A), (B), (C) und (D) in Form von einer oder zwei Mischungen vorliegen, in denen die Komponenten (A), (B), (C) und/oder (D) derart in mikroverkapselter Form reaktionsinhibierend getrennt enthalten sind, daß die Polymerisation der Komponenten unter Bildung des interpenetrierenden polymeren Netzwerks erst nach dem Inkontaktbringen der Komponenten unter Zerstörung bzw. Öffnung der Mikrokapseln erfolgt, die Verwendung dieses Mehrkomponenten-Ortschaumsystems zur Abdichtung von Durchbrüchen und/oder Durchführungen in Wänden und/oder Decken von Gebäuden und ein Verfahren zu Abdichtung solcher Durchbrüche und/oder Durchführungen unter Verwendung dieses Mehrkomponenten-Ortschaumsystems.

## Beschreibung

Die Erfindung betrifft ein Mehrkomponenten-Ortschaumsystem für die Herstellung von interpenetrierenden polymeren Netzwerken (IPN) aus geschäumtem Polyurethan und mindestens einem weiteren Polymer für Bauzwecke vor Ort, mit einer Polyisocyanatkomponente (A) und einer Polyolkomponente (B) zur Bildung des Polyurethans, und weiteren Komponenten (C) und (D) zur Bildung des weiteren Polymers, welche Komponenten (A) bis (D) in reaktionsinhibierend getrennter Form vorliegen, die Verwendung dieses Mehrkomponenten-Ortschaumsystems zur Abdichtung von Durchbrüchen und/oder Durchführungen in Wänden und/oder Decken von Gebäuden, sowie ein Verfahren zur Abdichtung von Durchbrüchen und/oder Durchführungen in Wänden und/ oder Decken von Gebäuden unter Verwendung dieses Mehrkomponenten-Ortschaumsystems.

Interpenetrierende polymere Netzwerke und deren Herstellung sind bekannt (Römpp, Lexikon Chemie, 10. Aufl. (1997), S. 1945). Die Herstellung solcher interpenetrierender polymerer Netzwerke kann in unterschiedlicher Weise erfolgen, beispielsweise durch die gleichzeitige Polymerisation von zwei oder mehr unterschiedlichen Monomeren in Anwesenheit von Vernetzern, wobei die Polymerisationsreaktion für jedes der eingesetzten Monomere spezifisch sein muß, indem beispielsweise das erste Monomer mit Hilfe des ersten Vernetzers ein polymeres Netzwerk bildet, in welches das zweite Monomer nicht oder kaum kovalent eingebaut wird. Das zweite Monomer bildet dann mit Hilfe des zweiten Vernetzers ein das polymere erste Netzwerk durchdringendes polymeres zweites Netzwerk, in welches das erste Monomer nicht oder kaum kovalent eingebunden ist. In Abhängigkeit von der Anzahl der unterschiedlichen Monomeren und der unterschiedlichen Polymerisationsarten können mehrere polymere Netzwerke ineinander verschränkt werden.

Die wesentliche Eigenschaft solcher interpenetrierender polymerer Netzwerke ist darin zu sehen, daß die gebildeten Polymernetzwerke einander gegenseitig durchdringen, wobei keine oder nur wenige chemische Bindungen zwischen den unterschiedlichen Netzwerken bestehen. Wegen der gegenseitigen Durchdringung und ihrer Vernetzung können sich die interpenetrierenden polymeren Systeme nicht mehr entmischen, wodurch sich eine besonders hohe mechanische Stabilität solcher Systeme ergibt.

Aus der DE 101 50 737 A1 ist ein gattungsmäßiges Mehrkomponenten-Ortschaumsystem für die Herstellung von Polyurethanschäumen für Bauzwecke vor Ort bekannt, mit einer Polyisocyanatkomponente (A) und einer Polyolkomponente (B), die in getrennten Behältern vorliegen, wobei neben der Polyisocyanatkomponente (A) und der Polyolkomponente (B) für die Ausbildung des Polyisocyanat-Netzwerkes weitere Komponenten (C) und (D) in räumlich getrennter Form enthalten sind, namentlich in getrennten Kammern von Mehrkammerkartuschen, wobei mindestens drei der Komponenten zur Ausbildung der interpenetrierenden Polymeren in getrennten Behältern, beispielsweise den Behältern eines Dreikomponenten-Auspreßgerätes, vorliegen. Beim Vermischen der Komponenten bildet sich ein interpenetrierendes polymeres Netzwerk aus geschäumtem Polyurethan und mindestens einem weiteren Polymer. Bei der bestimmungsgemäßen Anwendung wird das Mehrkomponenten-Ortschaumsystem mit Hilfe einer Abgabeeinrichtung mit Mischkopf, in dem die Komponenten innig vermischt werden, in den zu verschließenden Durchbruch und/oder die Durchführung eingebracht, wo das Material aufschäumt und aushärtet.

Dieses herkömmliche Mehrkomponenten-Ortschaumsystem erfordert aber zwingend die Anwendung von mindestens drei Behältern zur Aufnahme der Polyisocyanatkomponente (A), der Polyolkomponente (B) und mindestens einer der weiteren Komponenten zur Ausbildung des zweiten Polymeren des interpenetrierenden polymeren Netzwerks. Da mindestens drei der notwendigen vier Komponenten in getrennten Behältern gelagert werden müssen, um unerwünschte Reaktionen zu vermeiden, und das innige Vermischen der Bestandteile bei der bestimmungsgemäßen Anwendung vor Ort aufwendige Vorrichtungen erforderlich macht, liegt der vorliegenden Erfindung die Aufgabe zugrunde, die reaktiven notwendigen Komponenten eines Mehrkomponenten-Ortschaumsystems für die Herstellung von interpenetrierenden polymeren Netzwerken aus geschäumtem Polyurethan und mindestens einem weiteren Polymer für Bauzwecke vor Ort in anderer Weise gegeneinander abzuschirmen und damit eine Reaktion der reaktiven Bestandteile während der Lagerung zu verhindern, und gleichzeitig zu erreichen, daß die Ausgangsmaterialien für das interpenetrierende Netzwerk mit Hilfe eines üblichen Auspreßgeräts aus einem oder maximal zwei Behältern ausgebracht werden können, ohne das dabei die physikalischen oder chemischen, die Anwendung bestimmenden Eigenschaften des vor Ort gebildeten Ortschaums beeinträchtigt werden.

Es hat sich überraschenderweise gezeigt, daß diese Aufgabe dadurch gelöst werden kann, daß die Polyisocyanatkomponente (A), die Polyolkomponente (B) und die weiteren Komponenten (C) und (D) zur Bildung des weiteren Polymers in Form von einer oder zwei Mischungen vorliegen, in der beziehungsweise denen die Komponenten, die miteinander zu reagieren vermögen, derart in mikroverkapselter Form reaktionsinhibierend getrennt enthalten sind, das die Polymerisation der Komponenten unter Bildung des interpenetrierenden polymeren Netzwerks erst nach dem Inkontaktbringen der Komponenten unter Zerstörung beziehungsweise Öffnung der Mikrokapseln erfolgt.

Gegenstand der Erfindung ist daher das Mehrkomponenten-Ortschaumsystem gemäß Anspruch 1. Die Unteransprüche betreffen bevorzugte Ausführungs formen dieses Erfindungsgegenstandes sowie die Verwendung dieses Mehrkomponenten-Ortschaumsystems zur Abdichtung von Durchbrüchen, Öffnungen und/oder Durchführungen in Wänden und/oder Decken von Gebäuden sowie ein Verfahren zur Abdichtung solcher Öffnungen, Durchbrüche und Durchführungen.

Das erfindungsgemäße Mehrkomponenten-Ortschaumsystem der eingangs angegebenen Gattung ist nun **dadurch gekennzeichnet**, daß die Komponenten (A), (B), (C) und (D) in Form von einer oder zwei Mischungen vorliegen, in denen die Komponenten (A), (B), (C) und/oder (D) derart in mikroverkapselter Form reaktionsinhibierend getrennt enthalten sind, daß die Polymerisation der Komponenten unter Bildung des interpenetrierenden polymeren Netzwerks erst nach dem Inkontaktbringen der Komponenten unter Zerstörung bzw. Öffnung der Mikrokapseln erfolgt.

In dem erfindungsgemäßen Mehrkomponenten-Ortschaumsystem liegen die Komponenten (A), (B), (C) und (D), die miteinander reagieren können, in einer Weise vor, daß während der Lagerung keine Reaktion dieser Komponenten erfolgt, sondern daß diese Reaktion erst dann einsetzt, wenn sämtliche Komponenten unter Zerstörung beziehungsweise Öffnung der Mikrokapseln miteinander in Kontakt gebracht werden.

Erfindungsgemäß ist es daher notwendig, daß wenn zwei der Komponenten (A) bis (D), die miteinander zu reagieren vermögen, in ein oder derselben Mischung enthalten sind, mindestens eine dieser Komponenten in mikroverkapselter Form vorliegen muß, um in dieser Weise eine Reaktion dieser Komponenten miteinander zu verhindern, was bedeutet, daß diese Komponenten reaktionsinhibierend getrennt vorliegen.

Gemäß einer Ausführungsform der Erfindung liegen sämtliche Komponenten (A), (B), (C) und (D) in Form einer einzigen Mischung vor, in der mindestens eine der Komponenten (A) und (B) zur Bildung des Polyurethannetzwerkes und mindestens eine der Komponenten (C) und (D) zur Bildung des zweiten interpenetrierenden Polymers in mikroverkapselter Form vorliegen. Diese Ausführungsform der Erfindung ermöglicht eine sehr einfache Lagerhaltung und Anwendung des Mehrkomponenten-Ortschaumsystems in lediglich einem Behälter, beispielsweise einer Druckpatrone oder Druckbehälters in einem üblichen Einkammer-Auspreßgerät.

Gemäß einer zweiten Ausführungsform betrifft die Erfindung ein Mehrkomponenten-Ortschaumsystem, bei dem die Komponenten (A), (B), (C) und (D) in Form von zwei Mischungen vorliegen, die in getrennten Behältern enthalten sind, wobei eine Mischung die Komponente (A) und die andere Mischung die Komponente (B) enthält, und die Komponenten (C) und (D) gemeinsam oder getrennt in diesen Mischungen enthalten sind, wobei die mit dem (oder den) Bestandteil(en) der jeweiligen Mischung reagierende Komponente in mikroverkapselter Form vorliegt. Bei dieser Ausführungsform liegen die Komponenten in Form von zwei getrennten Mischungen in zwei getrennten Behältern vor, beispielsweise eines üblichen Zweikammer-Auspreßgeräts, so daß es nicht erforderlich ist, mindestens drei der reaktiven Komponenten in mikroverkapselter Form vorliegen zu haben. Bei dieser Ausführungsform genügt es, daß wenn beispielsweise die Polyisocyanatkomponente (A) in einer ersten Mischung in einem ersten Behälter vorliegt und die Polyolkomponente (B) zur Bildung des Polyurethans in der zweiten Mischung in einem zweiten getrennten Behälter vorliegt, die weiteren Komponenten (C) und (D) gemeinsam in einer der beiden Mischungen vorliegen können, wobei jede dieser Komponenten (C) und (D), die in den beiden Mischungen reagieren könnte, in mikroverkapselter Form vorliegt.

Gemäß einer weiteren bevorzugten Ausführungsform liegt mindestens eine der Komponenten (C) und (D) zur Bildung des weiteren Polymers in mikroverkapselter Form reaktionsinhibierend getrennt in der Polyisocyanatkomponente (A) und/oder der Polyolkomponente (B) vor, wobei gemäß dieser Ausführungsform die beiden Komponenten (C) und (D) auch getrennt in der Polyisocyanatkomponente (A) beziehungsweise der Polyolkomponente (B) enthalten sein können.

Bei dem erfindungsgemäßen Mehrkomponenten-Ortschaumsystem ist es erforderlich, daß die in mikroverkapselter Form vorliegenden Komponenten (A) bis (D) in Mikrokapseln vorliegen, die während der Lagerung gegenüber den sie umgebenden Bestandteilen der jeweiligen Mischung beständig sind und die ihren Inhalt erst während des Vermischens der Komponenten und/oder der dann ablaufenden Reaktionen unter Bildung des weiteren Polymers freisetzen.

Gemäß einer bevorzugten Ausführungsform der Erfindung sind die in mikroverkapselter Form reaktionsinhibierend getrennt vorliegenden Komponenten (A) bis (D) in Mikrokapseln enthalten, die bei der bestimmungsgemäßen Anwendung des Mehrkomponenten-Ortschaumsystems unter Einwirkung mechanischer Kräfte und/oder durch Temperaturerhöhung zerstört werden und ihren Inhalt freisetzen. Dabei können die Mikrokapseln derart ausgebildet sein, daß sie unter der Einwirkung der Kräfte zerstört werden, die beim Auspressen der Komponenten des Mehrkomponenten-Ortschaumsystems durch eine übliche Mischdüse mit Statikmischer auftreten, wodurch die in den Mikrokapseln vorliegenden reaktiven Bestandteile in der Mischung freigesetzt werden und mit der in der Mischung ebenfalls vorliegenden, gegebenenfalls ebenfalls aus Mikrokapseln freigesetzten korrespondierenden weiteren Komponente zur Ausbildung des entsprechenden Polymers reagieren.

Gemäß einer bevorzugten Ausführungsform sind die Mikrokapseln derart ausgebildet, daß sie ihren Inhalt unter Einwirkung der Reaktionswärme der Polyurethanbildungsreaktion freisetzen. Gemäß dieser Ausführungsform sind die Mikrokapseln aus einem Wandmaterial gebildet, welches bei der Reaktionstemperatur der Polyurethanbildungsreaktionen erweicht, aufschmilzt, aufbricht oder zersetzt wird. Die Mikrokapseln können beispielsweise unter der Einwirkung des aufgrund des Ausdehnungsverhaltens des verkapselten Inhalts entstehenden Innendrucks aufgesprengt beziehungsweise aufgebrochen werden. In besonders bevorzugter Weise sind die Mikrokapseln aus einem Wandmaterial mit einer Erweichungs-, Schmelz- oder Zersetzungstemperatur von 30°C bis 160°C, vorzugsweise 70°C bis 90°C gebildet.

Als Wandmaterial können die Mikrokapseln ein tierisches, pflanzliches oder synthetisches Wachs oder Fett oder ein organisches polymeres Material, vorzugsweise ausgewählt aus Paraffinen, Polyolefinen, Polystyrolen, Polyestern, Polyethern, Polyamiden, Polyaminen, Vinylpolymeren, Poly(meth)acrylaten. Polycarbonaten, thermoplastischen Polyurethanen, Aminoharzen, Epoxidharzen, Polyurethanen, ungesättigten Polyesterharzen, Phenolharzen, Melaminharzen, halogenhaltigen Polymeren, wie Polyvinylidenchloriden. Polyarylharzen, Polyacetalen, Polyimiden, Cellulosederivaten, Alginaten, Alginatderivaten, Gelatine, Gelatinederivaten, teilkristallinen Polymeren. Copolymeren auf der Grundlage der die obigen Polymere bildenden Monomeren und Mischungen aus diesen Materialien umfassen.

Weiterhin ist es möglich, die Wand der Mikrokapseln in Form mehrschichtiger Wände aus unterschiedlichen Materialien der oben angegebenen Bestandteile auszubilden.

In besonderes bevorzugter Weise umfaßt das Wandmaterial der Mikrokapseln ein Paraffinwachs, Polyolefinwachs oder Polyesterwachs, welches bei der beim Vermischen der Bestandteile des Mehrkomponenten-Ortschaumsystems auftretenden Reaktionstemperatur erweicht oder schmilzt und beim Durchmischen der Komponenten in dieser Weise den Inhalt der Mikrokapseln freigibt.

Vorzugsweise umfassen die Mikrokapseln 1 bis 90 Gew.-%, bevorzugter 25 bis 35 Gew.-% des Wandmaterials und entsprechend 99 bis 10 Gew.-%, bevorzugter 75 bis 65 Gew.-% des die Komponenten (A) bis (D) enthaltenden Kapselinhalts.

Die Herstellung der erfindungsgemäß eingesetzten Mikrokapseln, in denen die Komponenten (A) bis (D) enthalten sind, erfolgt in an sich bekannter Weise durch Ummantelung der in feiner Tröpfchenform vorliegenden Komponenten in flüssigem oder festem Zustand mit den oben angegebenen geeigneten Wandmaterialien, beispielsweise durch Umhüllung mit filmbildenden Polymeren, die sich nach dem Emulgieren und der Koazervation oder durch Grenzflächenpolymerisation auf dem einzuhüllenden feinteiligen Material niederschlagen. Hierzu werden an sich bekannte Coextrusions- und Vertropfungsverfahren angewandt, mit denen der Kapselinhalt und das Wandmaterial durch konzentrische Düsen extrudiert beziehungsweise vertropft werden. Dabei wird das Wandmaterial über die Auβendüse und das Kernmaterial über die Innendüse zugeführt. Die in dieser Weise gebildeten Kapseln oder Tröpfchen werden über einer anschließenden Kühl- beziehungsweise Trocknunsstrecke oder dergleichen ausgehärtet. Bei diesem Verfahren läßt sich das Verhältnis von Wandmaterial zu Kernmaterial über das Druckverhältnis der entsprechenden Zuführungsleitungen einstellen. Bezüglich näherer Angaben für diese und ähnliche Verfahren zur Herstellung der erfindungsgemäß eingesetzten mikroverkapselten Komponenten darf auf Römpp, Lexikon Chemie, 10. Auflage (1998), 2685 und Ullmann's Encyclopedia of Industrial Chemistry, 5. ed. (1990), 575-588 und die darin zitierten Druckschriften verwiesen werden.

Vorzugsweise enthalten die Mikrokapseln als Komponente (C) ein übliches Epoxidharz und/oder ein Siloxanpräpolymer, wobei das Epoxidharz und/oder das Siloxanpräpolymer in einer Menge von 10 bis 50 Gew.-%, bevorzugter 15 bis 35 Gew.-%, bezogen auf das Gewicht der Komponenten (A) bis (D) des Ortschaumsystems, in der Komponente (C) enthalten ist.

Die Komponente (C) enthält vorzugsweise ein Epoxidharz mit einem EpoxyÄquivalentgewicht von 100 bis 500 g/Mol, vorzugsweise 150 bis 200 g/Mol. Besonders bevorzugt sind Epoxidharze auf der Grundlage von 70% Bisphenol A und 30% Bisphenol F. Epoxidharze dieser Art und die dafür erforderlichen Härter sind an sich bekannt und auf dem Markt erhältlich.

Gemäß einer weiteren bevorzugten Ausführungsform enthält das Mehrkomponenten-Ortschaumsystem als Komponente (C) ein Siloxanpräpolymer mit einer mittleren Molmasse von 200 g/Mol bis 10.000 g/Mol, vorzugsweise 400 g/ Mol bis 3.000 g/Mol, und 2 bis 4, vorzugsweise 2 bis 3 reaktiven Endgruppen, insbesondere niedrigmolekularen Alkoxy- und Alkylester-Endgruppen, vorzugsweise Methoxyendgruppen.

Vorzugsweise enthält das Mehrkomponenten-Ortschaumsystems als Komponente (D) für die Bildung des weiteren interpenetrierenden Polymers auf der Grundlage eines Epoxidharzes einen üblichen Katalysator für die Polymerisation des Epoxidharzes, vorzugsweise ein tertiäres Amin, eine Lewis-Säure, noch bevorzugter ein Phenol, insbesondere 2,4,6-Tris(dimethylaminomethyl)-phenol, wobei dieser Katalysator gegebenenfalls in mikroverkapselter Form mit den oben angesprochenen Eigenschaften und Wandmaterialien der Mikrokapseln enthalten ist.

Für die Bildung des weiteren Polymers auf der Grundlage eines Siloxanpräpolymers enthält das erfindungsgemäße Mehrkomponenten-Ortschaumsystem als Komponente (D) vorzugsweise ein übliches Vernetzungsmittel für das Siloxanpräpolymer, vorzugsweise ein Organosiloxan mit mindestens drei Methoxyendgruppen pro Molekül, wobei auch dieser Bestandteil gegebenenfalls in mikroverkapselter Form, wie es oben erläutert worden ist, vorliegt.

Vorzugsweise umfaßt die Polyisocyanatkomponente (A) des erfindungsgemä-βen Mehrkomponenten-Ortschaumsystems mindestens ein Polyisocyanat mit einem NCO-Gehalt von 5 bis 55%, vorzugsweise 20 bis 50%, und einer durchschnittlichen Anzahl von 2 bis 5, vorzugsweise 2 bis 4 NCO-Gruppen pro Molekül. Besonders bevorzugte Polyisocyanate sind solche auf der Grundlage von Methylendiphenyldiisocyanat und/oder polymeren Homologen davon, namentlich solche mit einem NCO-Gehalt von 31% und durchschnittlich 2,7 NCO-Gruppen pro Molekül.

Vorzugsweise umfaßt die in dem erfindungsgemäßen Mehrkomponenten-Ortschaumsystems vorhandene Polyolkomponente (B) mindestens ein Polyol mit einer OH-Zahl von 30 bis 1000, bevorzugter 500 bis 1.000 und einer durchschnittlichen OH-Funktionalität pro Molekül von 2 bis 7, bevorzugter 2 bis 4.

Die Polyolkomponente (B) des erfindungsgemäßen Mehrkomponenten-Ortschaumsystems umfaßt vorzugsweise mindestens ein Polyetherpolyol und/ oder Polyesterpolyol mit einer OI-1-Zabl von 300 bis 1.000, vorzugsweise 500 bis 1.000 und einer durchschnittlichen OH-Funktionalität von 2 bis 7, vorzugsweise 2 bis 4 und/oder mindestens ein Aminopolyetherpolyol und/oder ein Polyol auf der Grundlage von Phosphorsäureestern mit einer OH-Zahl von 30 bis 1.000, vorzugsweise 100 bis 300, und einer durchschnittlichen OH-Funktionalität pro Molekül von 2 bis 7, bevorzugter 3 bis 5.

Vorzugsweise liegt die Kennzahl der Polyurethanreaktion im Bereich von 95 bis 165, noch bevorzugter im Bereich von 102 bis 120. Unter der Kennzahl der Polyurethanreaktion versteht man das prozentuale Verhältnis der eingesetzten Isocyanatgruppen (Stoffmenge der effektiv eingesetzten Isocyanatgruppen: nNCO) zu den eingesetzten aktiven Wasser stofffunktionen (Stoffmenge der effektiv eingesetzten Aktiv H-Funktionen: naktiveH), die beispielsweise von OH-Gruppen von Polyolen, von NH2-Gruppen von Aminen oder COOH-Gruppen von Carbonsäuren geliefert werden. Eine äquivalente Menge Isocyanat entspricht der Kennzahl 100. Ein 10%-iger Überschuß an Isocyanatgruppen entspricht der Kennzahl 110. Die Kennzahl ergibt sich durch die Division des Wertes nNCO durch naktiveH, multipliziert mit 100.

Vorzugsweise enthält die Polyolkomponente (B) des erfindungsgemäßen Mehrkomponenten-Ortschaumsystems Wasser als Treibmittel in einer Menge, die einen Polyurethanschaum mit einer Schaumdichte von 0,05 bis 0,5 g/cm3, noch bevorzugter 0,2 bis 0,4 g/cm3 ergibt, einen oder mehrere Katalysatoren für die Polyurethanbildungsreaktion, die Komponente (D) für die Bildung des weiteren interpenetrierenden Polymers und gegebenenfalls einen Schaumzellenstabilisator.

Gemäß einer bevorzugten Ausführungsform der Erfindung enthält die Polyolkomponente (B) des erfindungsgemäßen Mehrkomponenten-Ortschaumsystems als Katalysator für die Polyurethanbildungsreaktion einen oder mehrere übliche tertiäre Amin-Katalysatoren, vorzugsweise Dimorpholindiethylether.

Einer weiteren Variante zur Folge enthält die Polyolkomponente (B) des erfindungsgemäßen Mehrkomponenten-Ortschaumsystems als Komponente (D) für die Bildung des weiteren interpenetrierenden Polymers auf der Grundlage eines Epoxidharzes einen üblichen Katalysator für die Polymerisation von Epoxidharzen, vorzugsweise ein tertiäres Amin, eine Lewis-Säure, noch bevorzugter ein Phenol und ganz besonders bevorzugt 2,4,6-Tris(dimethylaminmethyl)-phenol.

Gemäß einer anderen Ausführungsform enthält die Polyolkomponente (B) des Mehrkomponenten-Ortschaumsystems als Komponente (D) für die Bildung des weiteren Polymers auf der Grundlage eines Siloxanpräpolymers ein übliches Vernetzungsmittel für solche Siloxanpräpolymere, vorzugsweise ein Organosiloxan mit mindestens drei Methoxygruppen pro Molekül.

Weiterhin kann die Polyolkomponente (B) als Schaumzellenstabilisator ein Polysiloxan enthalten.

Es ist natürlich möglich, daß die Komponenten (A), (B), (C) und/oder (D) des erfindungsgemäßen Mehrkomponenten-Ortschaumsystems übliche Füllstoffe, Hilfsstoffe und/oder Additive in üblichen Mengen enthalten, wobei gegebenenfalls reaktive Zusätze dieser Art ebenfalls mikroverkapselt vorliegen.

Das erfindungsgemäße Mehrkomponenten-Ortschaumsystem kann in der oder den Mischungen 0 bis 40 Gew.-%, vorzugsweise 1 bis 20 Gew.-% eines Füllstoffs ausgewählt aus Sand, Kreide, Perlite, Ruß oder Mischungen davon, 0 bis 2 Gew.-%, vorzugsweise 0,1 bis 1 Gew.-% eines oder mehrerer Farbstoffe und/oder 0 bis 40 Gew.-%, vorzugsweise 1 bis 20 Gew.-% eines brandhemmenden Additivs, jeweils bezogen auf das Gewicht des Ortschaumsystems, enthalten.

Vorzugsweise liegen die die Komponenten (A) bis (D) enthaltenden Mischungen des erfindungsgemäßen Mehrkomponenten-Ortschaumsystems in einem oder zwei getrennten Behältern vor, der beziehungsweise die über Zuführungsleitungen mit einer Abgabeeinrichtung mit Mischkopf verbunden sind, zum Vermischen und Inkontaktbringen der Komponenten (A) bis (D) und Ausbringen der gebildeten aufschäumenden Reaktionsmischung. Vorzugsweise umfaßt die Abgabeeinrichtung einen Mischkopf in Form eines Mundstücks mit einem statischen Mischer. In vorteilhafter Weise können der beziehungsweise die Behälter mit Auspreßeinrichtungen versehen sein zum Ausbringen der die Komponenten (A) bis (D) enthaltenden Mischung(en) in den Mischkopf der Abgabeeinrichtung.

Hierbei kann es von Vorteil sein, wenn der Mischkopf der Abgabeeinrichtung ein spaltenförmiges Gitter aufweist, an dem die durch das Gitter hindurchgepreßten Mikrokapseln aufgeschnitten werden oder durch die auftretenden Scherkräfte zerbrechen.

Die Auspreßeinrichtungen können mechanische Preßeinrichtungen und/oder Treibgase sein, die in der Polyisocyanatkomponente (A) und der Polyolkomponente (B) und/oder in der Druckkammer einer Zweikammerkartusche enthalten sind.

Die Erfindung betrifft weiterhin die Verwendung des erfindungsgemäßen Mehrkomponenten-Ortschaumsystems zum Abdichten von Öffnungen, Durchbrüchen und/oder Durchführungen in Wänden und/oder Decken von Gebäuden.

Die Erfindung betrifft weiterhin ein Verfahren zum Abdichten von solchen Öffnungen, Durchbrüchen und/oder Durchführungen in Wänden und/oder Dekken von Gebäuden, welches darin besteht, daß man das Mehrkomponenten-Ortschaumsystem der oben definierten Art unter Zerstörung der die mikroverkapselten Komponenten (A) bis (D) enthaltenden Mikrokapseln mit Hilfe der Abgabeeinrichtung mit Mischkopf, in dem die Komponenten vermischt werden, in die Öffnung, den Durchbruch und/oder die Durchführung einbringt, und unter Bildung eines interpenetrierenden polymeren Netzwerks (IPN) aus geschäumten Polyurethan und mindestens einem weiteren Polymer aufschäumen und aushärten läßt.

Das folgende Beispiel beziehungsweise Vergleichsbeispiel dient der weiteren Erläuterung der Erfindung.

### BEISPIEL UND VERGLEICHSBEISPIEL

### BEISPIEL

Für die Herstellung des erfindungsgemäßen Mehrkomponenten-Ortschaumsystems wurden die in der nachfolgenden Tabelle 1 angegebenen Bestandteile eingesetzt:

**Tabelle 1**

| **Stoff** | **Komponente** | **Beschreibung** | **Kennwert** | **Masse** |
|---|---|---|---|---|
| Polyisocyanat | (A) | Basierend auf Methylendiphenyl-diisocyanat (MDI) und polymere Homologe des MDI | NCO-Gehalt: 31%, durchschnittliche Anzahl an NCO-Gruppen pro Molekül: 2.7 | 16 g |
| Polyol 1 | (B) | Aminopolyetherpolyol | OH-Zahl: 480 durchschnittliche Anzahl an OH-Gruppen pro Molekül: 4 | 3,5 g |
| Polyol 2 | (B) | Bromiertes Polyetherpolyol | OH-Zahl: 270 durchschnittliche Anzahl an OH-Gruppen pro Molekül: 3.4 | 9.5 g |
| Polyol 3 | (B) | Alkylpolyol | OH-Zahl: 51 durchschnittliche Anzahl an OH-Gruppen rpo Molekül: 2 | 2,5 g |
| Polyol 4 | (B) | Polyol basierend auf Phosphorsäureester | OH-Zahl: 130 durchschnittliche Anzahl an OH-Gruppen pro Molekül: 2 | 4.75 g |
| Mikrokapseln mit Epoxidharz | (C) | Esterwachskapseln mit Epoxidharz auf Bisphenol-A und Bisphenol F-Basis | Epoxy-äquivalent-gewicht: 177-182 g/mol | 9g |
| Wasser | | | OH-Zahl: 3125 | 0,15 |
| Katalysator 1 | | Dimorpholindiethylether | | 5.5 g |
| Katalysator 2 | (D) | 2,4,6-Tris(dimethylaminomethyl)-phenol | | 0,2 g |
| Zellstabilisator | | Polysiloxan | | 1 g |

Man bildet eine erste Mischung durch Vermischen der Polyisocyanatkomponente (A) mit dem mikroverkapselten Epoxidharz (Komponente C). Durch Vermischen der Polyole 1 bis 4, des Wassers, der Katalysatoren 1 und 2 und des Zellstabilisators bildet man eine zweite Mischung. Die beiden Mischungen werden in Form von zwei Kartuschen in getrennte Behälter eingebracht, welche über Zuführungsleitungen mit einer Abgabeeinrichtung mit Mischkopf verbunden sind, in dem die beiden Mischungen vermischt werden.

Bei der Anwendung des erfindungsgeynäßen Ortschaumsystems werden die Bestandteile der beiden Behälter mit Hilfe eines Auspreßgerätes aus den Kartuschen über das Mundstück des Mischkopfes ausgepreßt und in die auszufüllende Öffnung eingebracht. Nach dem Vermischen der beiden Mischungen laufen maßgeblich drei chemische Reaktionen ab, nämlich die Polyurethanbildung, die Polymerisation des Epoxidharzes und die Schäumreaktion. Bei der exothermen Polyurethanbildung erhöht sich die Temperatur der Mischung, was zur Folge hat, daß das Esterwachs der Mikrokapseln des mikroverkapselten Epoxidharzes aufschmilzt und das Epoxidharz freisetzt, welches unter der Einwirkung der Komponente (D), das heißt des Katalysators, polymerisiert. Durch die Reaktion des Polyisocyanats mit den Polyolen in Gegenwart des Katalysators 1 wird das Polyurethan-Netzwerk gebildet, welches durch die Reaktion des Polyisocyanats mit dem vorhandenen Wasser unter Bildung von Kohlendioxid aufgeschäumt wird. Das Epoxidharz, welches in Gegenwart der Komponente (2), das heißt des Katalysators 2, ausgehärtet wird, vermittelt dem interpenetrierenden Netzwerk zusätzliche vorteilhafte Eigenschaften. nämlich eine hohe Hydrophobie und eine gute Haftung an Beton und Stein.

Es ist festzuhalten, daß die Mischung 1, die das Polyisocyanat und das mikroverkapselte Epoxidharz enthält, während ausreichend langer Zeit gelagert werden kann, ohne daß eine vorzeitige Reaktion erfolgt, so daß sich das erfindungsgemäße Mehrkomponenten-Ortschaumsystem hervorragend zur Erzeugung von wasserdichten interpenetrierenden polymeren Netzwerken aus Polyurethanschaum und Epoxidharz vor Ort einsetzen läßt. Die in dieser Weise erhaltenen Schäume zeigen hervorragende mechanische Festigkeitseigenschaften, gute Wasserdichtigkeit und/oder verbesserte Brandschutzeigenschaften.

### VERGLEICHSBEISPIEL

Entsprechend den Angaben des Beispiels 1 wird aus den in der nachfolgenden Tabelle 2 angegebenen Bestandteilen ein Mehrkomponenten-Ortschaumsystem hergestellt:

**Tabelle 2**

| **Stoff** | **Komponente** | **Beschreibung** | **Kennwert** | **Masse** |
|---|---|---|---|---|
| Polyisocyanat | (A) | Basierend auf Methylendiphenyl-diisocyanat (MDI) und polymere Homologe des MDI | NCO-Gehalt: 31%, durchschnittliche Anzahl an NCO-Gruppen pro Molekül: 2.7 | 16 g |
| Poyol 1 | (B) | Amiinopolyetherpolyol | OH-Zahl: 480 durchschnittliche Anzahl an OH-Gruppen pro Molekül: 4 | 3.5 g |
| Polyol 2 | (B) | Bromiertes Polyetherpolyol | OH-Zahl: 270 durchschnittliche Andurchschnittliche Anzahl an OH-Gruppen pro Molekül: 3,4 | 9.5 g |
| Polyol 3 | (B) | Alkyl polyol | OH-Zahl: 51 durchschnittliche Anzahl an OH-Gruppen rpo Molekül: 2 | 2.5 g |
| Polyol 4 | (B) | Polyol basierend auf Phosphorsäureester | OR-Zahl: 130 durchschnittliche Anzahl an OH-Gruppen pro Molekül: 2 | 4,75 g |
| Epoxidharz* | (C) | Epoxidharz auf Bisphenol-A und Bisphenol F-Basis | Epoxy-äquivalent-gewicht: 177-182 g/mol | 5g |
| Wasser | | | OH-Zahl: 3125 | 0,15 g |
| Katalysator 1 | | Dimorpholindiethylether | | 5,5 g |
| Katalvsator2 | (D) | 2, 4, 6-Tris(dimethylaminomethyl)-phenol | | 0,2 g 0,2 g |
| Zellstabilisator | | Polysiloxan | | 1 g |

| | | | | |
|---|---|---|---|---|
| *Die Menge des Epoxidharzes entspricht derjenigen des in den Mikrokapseln der Tabelle 1 enthaltenen Epoxidharzes. | | | | |

Die Herstellung der beiden Mischungen erfolgt in gleicher Weise wie in Beispiel 1 beschrieben, wobei der einzige Unterschied darin besteht, daß das in der ersten Mischung zusammen mit dem Polyisocyanat vorhandene Epoxidharz nicht in mikroverkapselter Form vorliegt. Diese Mischung muß allerdings unmittelbar vor der Anwendung hergestellt werden beziehungsweise muß die Bestandteile Polyisocyanat, Polyol und Epoxidharz für eine eventuelle Lagerung in drei getrennten Behältern enthalten, da das eingesetzte Epoxidharz nicht mit der Polyolkomponente kombiniert werden kann, weil die Katalysatoren für die Polyurethanreaktion auch die Epoxidharzreaktion katalysieren und im übrigen das Epoxidharz mit der Polyolkomponente reagiert. Entsprechendes gilt auch für die Polyisocyanatkomponente. Bei industriell hergestellten Epoxidharzen liegen im allgemeinen nicht strukturperfekte Mischungen von Diglycidylethern vor, sondern Oligomere unterschiedlicher Länge, die auch Hydroxylgruppen aufweisen können, so daß sich in Gegenwart der Polyisocyanatkomponente aufgrund der Urethanreaktion höhermolekulare Verbindungen bilden, die eine erhöhte Viskosität der Mischung zur Folge haben. Im übrigen können die Epoxygruppen des Epoxidharzes mit dem Polyisocyanat zu Oxazolidonen reagieren. So haben Lagerungsversuche von Epoxidharz und Isocyanat gezeigt, daß vor allem bei erhöhten Temperaturen (40°C) die Viskosität der Mischung stark ansteigt und ein Auspressen der vermischten Komponenten aus der Kartusche nicht mehr möglich ist. Demzufolge müssen bei dem Mehrkomponenten-Ortschaumsystem gemäß diesem Vergleichsbeispiel die Komponenten zeitnah vor der Anwendung vermischt werden oder in mindestens drei getrennten Behältern gelagert werden.

Im Gegensatz dazu ermöglicht das erfindungsgemäße Mehrkomponenten-Ortschaumsystem mit dem verkapselten Epoxidharz gemäß dem erfindungsgemäßen Beispiel. daß diese Reaktionen vermieden werden, da die erste Mischung aus der Polyisocyanatkomponente (A) und dem mikroverkapselten Epoxidharz (Komponente C) eine ausreichende Lagerstabilität aufweist, da auch keine Diffusion des Epoxidharzes der Komponente C durch die Mikrokapselwand zu erwarten ist.

Zur Überprüfung der Eigenschaften der aus diesen Mehrkomponenten-Ortschaumsystemen erhaltenen interpenetrierenden polymeren Netzwerke wurden die Schaumstoffe, die im Becher aufgeschäumt und ausgehärtet wurden, mittels thermogravimetrischer Analyse untersucht. Hierbei wurden Proben der Schäume mit nicht verkapseltem Epoxidharz beziehungsweise verkapseltem Epoxidharz hergestellt und ausgestanzt (ca. 50 mg) und einer synthetischen Luftatmosphäre mittels thermogravimetrischer Analyse in einem Temperaturbereich von 25°C bis 800°C untersucht, bei einer Aufheizrate von 10 K/min und einem Gasfluß von synthetischer Luft beziehungsweise Stickstoff von 50 ml/min.

Es hat sich gezeigt, daß der Kurvenverlauf der thermogravimetrischen Analyse der beiden Mehrkomponenten-Ortschaumsysteme sehr ähnlich ist, indem der Rückstand bei 800°C in synthetische Luftatmosphäre bei nicht verkapseltem Epoxidharz 8.9% und bei mikroverkapseltem Epoxidharz 7,5% beträgt, was auf einen sehr ähnlichen Netzwerkaufbau der mit diesen Mehrkomponenten-Ortschaumsystemen erhaltenen interpenetrierenden polymeren Netzwerke schließen läßt.

Weiterhin wurden thermomechanische Messungen (TMA) in synthetischer Luftatmosphäre durchgeführt. Hierzu wurden aus den in der obigen Weise erhaltenen Schäumen Zylinder ausgestanzt und deren Längenänderung in Abhängigkeit von der Temperatur gemessen. Es wurde anschließend die Längenänderung während 20 Minuten bei 800°C verfolgt. Es zeigt sich, daß der Kurvenverlauf der TMA-Messung in synthetischer Luftatmosphäre im Rahmen der Fehlergrenzen identisch ist, indem beide Materialien eine erste große Längenabnahme von 36% beziehungsweise 40% bei etwa 300°C aufweisen, gefolgt von einem nahezu parallelen weiteren Längenverhalten bis zu einer Temperatur von 800°C,

Die beiden untersuchten Proben verhalten sich daher sowohl im Verlauf der Gewichtsabnahme in Abhängigkeit von der Temperatur als auch in der Längenänderung in Abhängigkeit von der Temperatur sehr ähnlich, so daß festzustellen ist, daß das erfindungsgemäße Mehrkomponenten-Ortschaumsystem ein interpenetrierendes polymeres Netzwerk aus geschäumtem Polyurethan liefert mit Eigenschaften, die weitgehend jenen des Vergleichsprodukts entsprechen.

Allerdings muß das Mehrkomponenten-Ortschaumsystem des Vergleichsbeispiels in Form von drei getrennten Komponenten gelagert werden, nämlich eine erste Mischung, die die Polyisocyanatkomponente (A) enthält, eine zweite Mischung, die die Polyolkomponente (B) enthält und eine dritte Komponente (C), die das Epoxidharz enthält. Im Gegensatz dazu kann das erfindungsgemäße Mehrkomponenten-Ortschaumsystem aufgrund des in mikroverkapselter Form reaktionsinhibierend getrennt enthaltenden reaktiven Komponenten lediglich in einer oder zwei Mischungen gelagert werden, was für die Praxis einen erheblichen Vorteil darstellt.

## Patentansprüche

1. Mehrkomponenten-Ortschaumsystem für die Herstellung von interpenetrierenden polymeren Netzwerken (IPN) aus geschäumtem Polyurethan und mindestens einem weiteren Polymer für Bauzwecke vor Ort, mit einer Polyisocyanatkomponente (A) und einer Polyolkomponente (B) zur Bildung des Polyurethans und weiteren Komponenten (C) und (D) zur Bildung des weiteren Polymers, welche Komponenten (A) bis (D) in reaktionsinhibierend getrennter Form vorliegen, **dadurch gekennzeichnet, daß** die Komponenten (A), (B), (C) und (D) in Form von einer oder zwei Mischungen vorliegen, in denen die Komponenten (A), (B), (C) und/oder (D) derart in mikroverkapselter Form reaktionsinhibierend getrennt enthalten sind, daß die Polymerisation der Komponenten unter Bildung des interpenetrierenden polymeren Netzwerks erst nach dem Inkontaktbringen der Komponenten unter Zerstörung bzw. Öffnung der Mikrokapseln erfolgt.

2. Mehrkomponenten-Ortschaumsystem nach Anspruch 1, **dadurch gekennzeichnet, daß** die Komponenten (A), (B), (C) und (D) in Form einer Mischung vorliegen und mindestens eine der Komponenten (A) und (B) und mindestens eine der Komponenten (C) und (D) in mikroverkapselter Form vorliegen.

3. Mehrkomponenten-Ortschaumsystem nach Anspruch 1, **dadurch gekennzeichnet, daß** die Komponenten (A), (B), (C) und (D) in Form von zwei Mischungen vorliegen, die in getrennten Behältern enthalten sind, wobei eine Mischung die Komponente (A) und die andere die Komponenten (B) enthält, und die Komponenten (C) und (D) gemeinsam oder getrennt in diesen Mischungen enthalten sind, wobei die mit dem (oder den) Bestandteil(en) der jeweiligen Mischung reagierende Komponente in mikroverkapselter Form vorliegt.

4. Mehrkomponenten-Ortschaumsystem nach mindestens einem der Ansprüche 1 bis 3, **dadurch gekennzeichnet, daß** mindestens eine der Komponenten (C) und (D) zur Bildung des weiteren Polymers in mikroverkapselter Form reaktionsinhibierend getrennt in der Polyisocyanatkomponente (A) und/ / oder der Polyolkomponente (B) vorliegt.

5. Mehrkomponenten-Ortschaumsystem nach Anspruch 4, **dadurch gekennzeichnet, daß** die Komponenten (C) und (D) getrennt in der Polyisocyanatkomponente (A) bzw. der Polyolkomponente (B) enthalten sind.

6. Mehrkomponenten-Ortschaumsystem nach mindestens einem der Ansprüche 1 bis 5, **dadurch gekennzeichnet, daß** die in mikroverkapselter Form vorliegenden Komponenten (A) bis (D) in Mikrokapseln vorliegen, die während der Lagerung gegenüber den sie umgebenden Bestandteilen der Mischung beständig sind und die ihren Inhalt erst während des Vermischens der Komponenten und/oder der dann ablaufenden Reaktionen unter Bildung des weiteren Polymers freisetzen.

7. Mehrkomponenten-Ortschaumsvstem nach mindestens einem der An sprüche 1 bis 6, **dadurch gekeimseichnet,** daß die die Komponenten (A) bis (D) enthaltenden Mikrokapseln bei der bestimmungsgemäßen Anwendung des Mehrkomponenten-Ortschaumsystems unter Einwirkung mechanischer Kräfte und/oder durch Temperaturerhöhung zerstört werden und ihren Inhalt freisetzen.

8. Mehrkomponenten-Ortschaumsystem nach Anspruch 7, **dadurch gekennzeichnet, daß** die Mikrokapseln ihren Inhalt unter Einwirkung der Reaktionswärme der Polyurethanbildungsreaktion freisetzen.

9. Mehrkomponenten-Ortschaumsystem nach Anspruch 8, **dadurch gekennzeichnet, daß** die Mikrokapseln aus einem Wandmaterial gebildet sind, welches bei der Reaktionstemperatur der Polyurethanbildungsreaktion erweicht, aufschmilzt, aufbricht oder zersetzt wird.

10. Mehrkomponenten-Ortschaumsystem nach Anspruch 6, **dadurch gekennzeichnet, daß** die Mikrokapseln aus einem Wandmaterial mit einer Erweichungs-, Schmelz- oder Zersetzungstemperatur von 30 bis 160°C, vorzugsweise 70 bis 90°C gebildet sind.

11. Mehrkomponenten-Ortschaumsystem nach mindestens einem der Ansprüche 1 bis 7, **dadurch gekennzeichnet, daß** die Mikrokapseln als Wandmaterial ein tierisches, pflanzliches oder synthetisches Wachs oder Fett oder ein organisches polymeres Material, vorzugsweise ausgewählt aus Paraffinen, Polyolefinen, Polystyrolen, Polyestern, Polyethern, Polyamiden, Polyaminen, Vinylpolymeren, Poly(meth)acrylaten, Polycarbonaten, thermoplastischen Polyurethanen, Aminoharzen, Epoxidharzen, Polyurethanen, ungesättigten Polyesterharzen, Phenolharzen, Melaminharzen, halogenhaltigen Polymeren, wie Polyvinylidenchloriden, Polyarylharzen, Polyacetalen, Polyimiden, Cellulosederivaten, Alginaten, Alginatderivaten, Gelatine, Gelatinederivaten, teilkristallinen Polymeren, Copolymeren auf der Grundlage der die obigen Polymere bildenden Monomeren und Mischungen aus diesen Materialien umfassen können.

12. Mehrkomponenten-Ortschaumsystem, nach Anspruch 11. **dadurch gekennzeichnet, daß** die Mikrokapseln ein Paraffinwachs, Polyolefinwachs oder Polyesterwachs als Wandmaterial umfassen.

13. Mehrkomponenten-Ortschaumsystem nach mindestens einem der Ansprüche 1 bis 12, **dadurch gekennzeichnet, daß** die Mikrokapseln 1 bis 90 Gew.-%, vorzugsweise 25 bis 35 Gew.-%, des Wandmaterials und entsprechend 99 bis 10 Gew.-%, vorzugsweise 75 bis 65 Gew.- % des die Komponenten (A) bis (D) enthaltenden Kapselinhalts umfassen.

14. Mehrkomponenten-Ortschaumsystem nach mindestens einem der Ansprüche 1 bis 13, **dadurch gekennzeichnet, daß** in den Mikrokapseln als Komponente (C) ein Epoxidharz und/oder ein Siloxanpräpolymer enthalten ist.

15. Mehrkomponenten-Ortschaumsystem nach Anspruch 14, **dadurch gekennzeichnet, daß** das Epoxidharz und/oder das Siloxanpräpolymer in einer Menge von 10 bis 50 Gew.-%, bevorzugter 15 bis 35 Gew.-%, bezogen auf das Gewicht der Komponenten (A) bis (D) des Ortschaumsystems, in der Komponente (C) enthalten ist.

16. Mehrkomponenten-Ortschaumsystem nach Anspruch 15 oder 15, **dadurch gekennzeichnet, daß** als Komponente (C) ein Epoxidharz mit einem Epoxyäquivalentgewicht von 100 bis 500 g/Mol, vorzugsweise von 150 bis 200 g/Mol enthalten ist.

17. Mehrkomponenten-Ortschaumsystem nach Anspruch 16, **dadurch gekennzeichnet, daß** ein Epoxidharz auf der Grundlage von 70 % Bisphenol A und 30% Bisphenol F enthalten ist.

18. Mehrkomponenten-Ortschaumsystem nach Anspruch 14 oder 15, **dadurch gekennzeichnet, daß** als Komponente (C) ein Siloxanpräpolymer mit einer mittleren Molmasse von 200 g/Mol bis 10.000 g/Mol, vorzugsweise 400 g/Mol bis 3.000 g/Mol, und 2 bis 4, vorzugsweise 2 bis 3 reaktiven Endgruppen, insbesondere niedrigmolekularen Alkoxy- und Alkylester-Endgruppen, vorzugsweise Methoxyendgruppen, enthalten ist.

19. Mehrkomponenten-Ortschaumsystem nach mindestens einem der Ansprüche 14 bis 17, **dadurch gekennzeichnet, daß** als Komponente (D) für die Bildung des weiteren Polymers auf der Grundlage eines Epoxidharzes ein üblichen Katalysator für die Polymerisation des Epoxidharzes, vorzugsweise ein tertiäres Amin, eine Lewis-Säure, bevorzugter ein Phenol, insbesondere 2,4,6-Tris(dimethylaminomethyl)-phenol, gegebenenfalls in mikroverkapselter Form enthalten ist.

20. Mehrkomponenten-Ortschaumsystem nach mindestens einem der Ansprüche 14, 15 und 18, **dadurch gekennzeichnet, daß** als Komponente (D) für die Bildung des weiteren Polymers auf der Grundlage eines Siloxanpräpolymers ein übliches Vernetzungsmittel für das Siloxanpräpolymer, vorzugsweise ein Organooxysilan mit mindestens drei Methoxyendgruppen pro Molekül gegebenenfalls in mikroverkapselter Form enthalten ist.

21. Mehrkomponenten-Ortschaumsystem nach mindestens einem der Ansprüche 1 bis 20, **dadurch gekennzeichnet, daß** die Polyisocyanatkomponente (A) mindestens ein Polyisocyanat mit einem NCO-Gehalt von 5 bis 55%, vorzugsweise 20 bis 50%, und einer durchschnittlichen Anzahl von 2 bis 5. vorzugsweise 2 bis 4 NCO-Gruppen pro Molekül umfaßt.

22. Mehrkomponenten-Ortschaumsystem nach Anspruch 21, **dadurch gekennzeichnet, daß** die Polyisocyanatkomponente (A) ein Polyisocyanat auf der Grundlage von Methylendiphenyldiisocyanat und/oder polymere Homologe davon umfaßt.

23. Mehrkomponenten-Ortschaumsystem nach Anspruch 22, **dadurch gekennzeichnet, daß** die Polyisocyanatkomponente (A) ein Polyisocyanat auf der Grundlage von Methylendiphenyldiisocyanat und/oder polymere Homologe davon mit einem NCO-Gehalt von 31% und durchschnittlich 2,7 NCO-Gruppen pro Molekül umfaßt.

24. Mehrkomponenten-Ortschaumsystem nach mindestens einem der Ansprüche 1 bis 23, **dadurch gelzennzeichnet,** daß die Polyolkomponente (B) mindestens ein Polyol mit einer OH-Zahl von 30 bis 1.000, vorzugsweise 500 bis 1.000, und einer durchschnittlichen OH-Funktionalität pro Molekül von 2 bis 7, vorzugsweise 2 bis 4 umfart.

25. Mehrkomponenten-Ortschaumsystem nach Anspruch 24, **dadurch gekennzeichnet, daß** die Polyolkomponente (B) mindestens ein Polyetherpolyol und/oder Polyesterpolyol mit einer OH-Zahl von 300 bis 1.000, vorzugsweise 500 bis 1.000, und einer durchschnittlichen OH-Funktionalität von 2 bis 7, vorzugsweise 2 bis 4, und/oder mindestens ein Aminopolyetherpolyol und/ oder ein Polyol auf der Grundlage von Phosphorsäureestern mit einer OH-Zahl von 30 bis 1.000, vorzugsweise 100 bis 300 und einer durchschnittlichen OH-Funktionalität pro Molekül von 2 bis 7, vorzugsweise 3 bis 5 umfaßt.

26. Mehrkomponenten-Onschaumsystem nach mindestens einem der Ansprüche 1 bis 25, **dadurch gekennzeichnet, daß** die Kennzahl der Polyurethan-Reaktion im Bereich von 95 bis 165, vorzugsweise 102 bis 120 liegt.

27. Mehrkomponenten-Ortschaumsystem nach mindestens einem der Ansprüche 1 bis 26, **dadurch gekennzeichnet, daß** die Polyolkomponente (B) Wasser in einer Menge die einen Polyurethanschaum mit einer Schaumdichte von 0,05 bis 0,5 g/cm3, vorzugsweise von 0,2 bis 0.4 g/cm3 ergibt, einen oder mehrere Katalysatoren für die Polyurethanbildungsreaktion, die Komponente (D) für die Bildung der weiteren Polymers und gegebenenfalls einen Schaumzellenstabilisator enthält.

28. Mehrkomponenten-Ortschaumsystem nach Anspruch 27, **dadurch, gekennzeichnet, daß** die Polyolkomponente (B) als Katalysator für die Polyurethanbildungsreaktion ein oder mehrere tertiäre Amine, vorzugsweise Dimorpholindiethylether enthält.

29. Mehrkomponenten-Ortschaumsystem nach Anspruch 27, **dadurch gekennzeichnet, daß** die Polyolkomponente (B) als Komponente (D) für die Bildung des weiteren Polymers auf der Grundlage eines Epoxidharzes einen üblichen Katalysator für die Polymerisation des Epoxidharzes, vorzugsweise ein tertiäres Amin, eine Lewis-Säure, bevorzugter ein Phenol, insbesondere 2,4,6-Tris(dimethylaminomethyl)-phenol enthält.

30. Mehrkomponenten-Ortschaumsystem nach Anspruch 27, **dadurch gekennzeichnet, daß** die Polyolkomponente (B) als Komponente (D) für die Bildung des weiteren Polymers auf der Grundlage eines Siloxanpräpolymers ein übliches Vernetzungsmittel für das Siloxanpräpolymer, vorzugsweise ein Organooxysilan mit mindestens drei Methoxyendgruppen pro Molekül enthält.

31. Mehrkomponenten-Ortschaumsystem nach Anspruch 27, **dadurch gekennzeichnet, daß** die Polyolkomponente (B) als Schaumzellenstabilisator ein Polysiloxan enthält.

32. Mehrkomponenten-Ortschaumsystem nach mindestens einem der Ansprüche 1 bis 31, **dadurch gekennzeichnet,** daβ die Komponenten (A), (B), (C) und/oder (D) übliche Füllstoffe, Hilfsstoffe und/oder Additive in üblichen Mengen enthalten.

33. Mehrkomponenten-Ortschaumsystem nach Anspruch 30, **dadurch gekennzeichnet, daß** es 0 bis 40 Gew.-%, vorzugsweise 1 bis 20 Gew.-% eines Füllstoffs ausgewählt aus Sand, Kreide, Perlite, Ruß oder Mischungen davon, 0 bis 2 Gew.-%, vorzugsweise 0,1 bis 1 Gew.-% eines oder mehrerer Farbstoffe und/oder 0 bis 40 Gew.-%, vorzugsweise 1 bis 20 Gew.-% eines brandhemmenden Additivs, jeweils bezogen auf das Gewicht des Ortschaumsystems, enthält

34. Mehrkomponenten-Ortschaumsystem nach mindestens einem der Ansprüche 1 bis 31, **dadurch gekennzeichnet,** daβ die die Komponenten (A) bis (D) enthaltenden Mischungen in einem oder zwei getrennten Behältern vorliegen, der bzw. die über Zuführungsleitungen, mit einer Abgabeeinrichtung mit Mischkopf verbunden sind, zum Vermischen und Inkontaktbringen der Komponenten (A) bis (D) und Ausbringen der gebildeten aufschäumenden Reaktionsmischung.

35. Mehrkomponenten-Ortschaumsystem nach Anspruch 34, **dadurch gekennzeichnet, daß** die Abgabeeinrichtung einen Mischkopf in Form eines Mundstücks mit einen statischen Mischer umfaßt.

36. Mehrkomponenten-Ortschaumsystem nach Anspruch 34 oder 45, **dadurch gekennzeichnet, daß** der bzw. die Behälter mit Auspreßeinrichtungen versehen sind zum Ausbringen der die Komponenten (A) bis (D) enthaltenden Mischung(en) in den Mischkopf der Abgabeeinrichtung.

37. Mehrkomponenten-Ortschaumsystem nach Anspruch 36, **dadurch gekennzeichnet, daß** als Auspreßeinrichtungen mechanische Preßeinrichtungen und/oder Treibgase, die in der Polyisocyanatkomponente (A) und der Polyolkomponente (B) und/oder in der Druckkammer einer Zweikammerkartusche enthalten sind, vorhanden sind.

38. Verwendung des Mehrkomponenten-Ortschaumsystems nach mindestens einem der Ansprüche 1 bis 37 zur Abdichtung von Durchbrüchen und/oder Durchführungen in Wänden und/oder Decken von Gebäuden.

39. Verfahren zur Abdichtung von Durchbrüchen und/oder Durchführungen in Wänden und/oder Decken von Gebäuden, **dadurch gekennzeichnet, daß** man das Mehrkomponenten-Ortschaumsystem nach mindestens einem der Ansprüche 1 bis 37 unter Zerstörung der die mikroverkapselten Komponenten (A) bis (D) enthaltenden Mikrokapseln mit Hilfe der Abgabeeinrichtung mit Mischkopf, in dem die Komponenten vermischt werden, in den Durchbruch und/oder die Durchführung einbringt und unter Bildung eines interpenetrierenden polymeren Netzwerks (IPN) aus geschäumtem Polyurethan und mindestens einem weiteren Polymer aufschäumen und aushärten läßt.
